# EUROPÄISCHE PATENTSCHRIFT

(11) **EP 3 423 024 B1**
(45) Veröffentlichungstag und Bekanntmachung des Hinweises auf die Patenterteilung: **25.12.2019**
(21) Anmeldenummer: 17706408.6
(22) Anmeldetag: 10.02.2017
(51) Int. Cl.: A61J 1/05, A61J 1/14, B65D 1/02

(54) **BEHÄLTER AUS KUNSTSTOFFMATERIAL SOWIE VERFAHREN ZUM HERSTELLEN EINES SOLCHEN BEHÄLTERS**
CONTAINER CONSISTING OF PLASTIC MATERIAL, AND METHOD FOR PRODUCING A CONTAINER OF THIS TYPE
CONTENANT EN MATIÈRE PLASTIQUE ET PROCÉDÉ DE FABRICATION DE CE CONTENANT

(30) Priorität: 29.02.2016 DE 102016002467
(43) Veröffentlichungstag der Anmeldung: 09.01.2019
(73) Patentinhaber: Kocher-Plastik Maschinenbau GmbH, 74429 Sulzbach-Laufen (DE)
(72) Erfinder: SPALLEK, Michael, 55218 Ingelheim (DE); GESER, Johannes, 70839 Gerlingen (DE); HAMMER, Alexander, 74405 Gaildorf (DE); SCHRECKENHÖFER, Manfred, 74429 Sulzbach-Laufen (DE); GROH, Martin, 74405 Gaildorf (DE)
(74) Vertreter: Bartels, Martin Erich Arthur
(86) Internationale Anmeldenummer: PCT/EP2017/000191
(87) Internationale Veröffentlichungsnummer: WO 2017/148570

(56) Entgegenhaltungen:
- EP-A1- 2 067 464
- JP-A- H0 872 843
- JP-A- 2004 175 406
- US-A1- 2011 240 673

## Beschreibung

Die Erfindung betrifft einen Behälter aus Kunststoffmaterial, der nach dem Blasform-, Füll- und Siegelverfahren hergestellt und dessen von einer Behälterwand eingeschlossene Befüllung autoklavierbar ist. Ferner bezieht sich die Erfindung auf ein Verfahren zum Herstellen eines derartigen Behälters.

Bei der Verpackung von großvolumigen Arzneimitteln und Medizinprodukten, wie Infusions- oder Spüllösungen, ist eine hohe Verpackungsdichte erforderlich, da unnötig große und schwere Verpackungen zu hohen Kosten bei Materialeinsatz, Transport und Lagerhaltung führen. Aus diesem Grund wurden die früher für Infusionslösungen häufig verwendeten Glasflaschen durch Behälter aus Kunststoff weitgehend abgelöst. Auf besonders rationelle Weise werden derartige Behälter nach dem bekannten Blasform-, Füll- und Siegelverfahren (BFS) hergestellt, das in der Fachwelt auch unter der Bezeichnung (DE 103 47 908 A1, DE 10 2013 012 809 A1) "bottelpack®-System" bekannt ist. Ein wesentlicher Vorteil solcher Behälter für den medizinischen und/oder pharmazeutischen Einsatzzweck besteht darin, dass der Inhalt ausschließlich Kontakt zu einem das Behältermaterial bildenden Polymer hat, so dass nach diesem BFS-Verfahren hergestellte und befüllte Behälter die Keimarmut/Sterilität des Inhalts für längere Zeiträume gewährleisten.

Um eine leichte und sichere Handhabung solcher Behälter zu ermöglichen, werden vom Anwender verhältnismäßig steife und standfeste Flaschen bevorzugt. Beispielsweise werden zu Infusionslösungen oder Emulsionen oder Suspensionen zur Infusion, wie beispielsweise isotonische Kochsalzlösung; Mannitol-oder Glukoselösungen, Medikamente zugespritzt, was sich mittels Kanüle bei steiferen Behältern sehr viel leichter ausführen lässt als bei einem mechanisch sehr instabilen, dünnen Beutel.

Diese Anwenderforderung führt jedoch dazu, dass sich biegesteife Behälter nicht vollständig entleeren lassen, ohne einen Druckausgleich (Belüften) zuzulassen. Dies gelingt bei Glasbehältern typischerweise mit entsprechenden belüfteten Infusionsgeräten (siehe Bild 1 in DIN EN ISO 8536-4:2011-01). Eine Belüftung ist jedoch wegen dem damit verbundenen Risiko einer mikrobiellen Verunreinigung aus medizinischen Gründen nicht erwünscht; so werden nicht belüftete Infusionsgeräte (siehe Bild 2 in DIN EN ISO 8536-4:2011-01) bevorzugt. Andererseits ist es aus medizinischen Gründen erforderlich, dass Infusionslösungen im verschlossenen Behälter terminal sterilisiert werden, was gemäß den europäischen Vorgaben durch Autoklavieren bei Temperaturen von 121 °C für die Dauer von mindestens 20 Minuten erreicht wird. Dies zwingt dazu, für die Behälterherstellung Polymere mit einer entsprechend hohen Wärmeformbeständigkeit zu benutzen. Dies schließt den Einsatz weichen Polyethylens (LDPE) wegen zu geringer Wärmeformbeständigkeit aus und macht die Verwendung von wesentlich steiferem Polypropylen erforderlich. Das dadurch ermöglichte Autoklavieren im hohen Temperaturbereich und die bequeme Handhabbarkeit relativ steifer Behälter aus Polypropylen beeinträchtigen jedoch bei Infusionsvorgängen ohne Belüftung das Auslaufverhalten von Behältern aus Polypropylen, wenn diese nahezu vollständig befüllt sind und daher nur ein geringes relatives Luftvolumen enthalten. Während weiche Flaschen und Beutel bei geringen Druckdifferenzen kollabieren, behindert die Behältersteifigkeit einen entsprechenden Ausgleich.

US 2011/240673 A1 offenbart einen gattungsgemäßen Behälter aus Kunststoffmaterial, der nach dem Blasform-, Füll- und Siegelverfahren hergestellt und dessen von einer Behälterwand eingeschlossene Befüllung autoklavierbar ist, wobei mindestens ein Gestaltsmittel in der Behälterwand vorgesehen ist, das trotz eines hohen Befüllungsgrades sicherstellt, dass bei einer Infusionsabgabe des Füllguts ohne Behälterbelüftung der Behälter volumenreduzierend kollabiert, wobei er von seiner Grundausgestaltung her rechteckförmig ausgebildet ist und an zwei einander gegenüberliegenden Behälterwandseiten als ein Gestaltsmittel vorspringende Wandteile aufweist, die paarweise konisch aufeinander zugeneigt einen Konuswinkel (ifa) miteinander einschließen, und wobei ausgehend von seinen beiden Stirnseiten und der jeweils zuordenbaren Behälterwandseite die seitliche Schulterfläche als weiteres Gestaltsmittel in Form eines Wanddreiecks in Richtung der vorspringenden, den Konuswinkel (ifa) begrenzenden Wandteile schräg abfällt

In Notfällen werden Infusionen oft als pneumatische Druckinfusionen mit Druckinfusionsapparaten (ISO 8536-8) verabreicht. Hierfür wird das Infusionsbehältnis in eine aufblasbare Manschette eingelegt, die von außen einen erhöhten Druck auf die Flasche und den Flascheninhalt ausübt. Auch hier ist eine geringe Rückstellkraft des Behälters ein wichtiges Kriterium, um eine möglichst schnelle und gleichmäßige Infusionsverabreichung zu gewährleisten.

Im Hinblick auf diese Problematik liegt der Erfindung die Aufgabe zugrunde, einen nach dem BFS-Verfahren hergestellten, autoklavierbaren Kunststoffbehälter zur Verfügung zu stellen, der bei nahezu vollständiger Befüllung beim Infusionsvorgang auch ohne Belüftung vollständig ausläuft. Erfindungsgemäß ist diese Aufgabe durch einen Behälter gelöst, der die Merkmale des Patentanspruchs 1 in seiner Gesamtheit aufweist.

Eine wesentliche Besonderheit der Erfindung besteht gemäß dem kennzeichnenden Teil des Anspruchs 1 darin, dass auf seinen gegenüberliegenden Behälterwandseiten als weiteres Gestaltsmittel eine flach abfallende Vertiefung eingeformt ist, die in einer Mittenlinie entlang der Längsachse verläuft, im Abstand vom Boden endet und sich dort in Richtung auf die benachbarten Stirnseiten hin in zwei Abschlusslinien aufteilt, die an der Stelle des Übergangs zu der Mittenlinie einen Anstellwinkel (Awi) von 60°-130° miteinander einschließen. Die beim Infusionsvorgang zum Kollabieren der Behälterwand und damit zur Volumenverringerung des Innenvolumens des Behälters führende Gestaltung eröffnet die vorteilhafte Möglichkeit, Behälter nach dem BFS-Verfahren herzustellen, die trotz der Verwendung steiferer Materialien ein sicheres Auslaufen bei Infusionsvorgängen ohne Belüftung gewährleisten.

Mit besonderem Vorteil lassen sich daher Kunststoffmaterialien mit einer hohen Wärmeformbeständigkeit, wie Polypropylen, die gegen das Autoklavieren ausreichend wärmeresistent sind, als für das BFS-Verfahren gut geeignete Behälterwerkstoffe einsetzen.

Bei vorteilhaften Ausführungsbeispielen ist die Behälterwand mit einem hermetisch verschlossenen Kopfteil, das auf einer seiner Stirnseiten angeordnet als Entnahmeöffnung für das Behälter-Füllgut dient, einstückig ausgebildet. Die Behälter lassen sich in dieser Form mittels Formwerkzeugen einfacher Bauweise herstellen.

Der erfindungsgemäße Behälter ist von seiner Grundausgestaltung her rechteckförmig ausgebildet und weist an zwei einander gegenüberliegenden Behälterwandseiten als ein Gestaltsmittel vorspringende Wandteile auf, die, paarweise konisch aufeinander zu geneigt, einen Konuswinkel (ifa) von von weniger als 120° miteinander einschließen.

Mit besonderem Vorteil kann hierbei das jeweils vorspringende Wandteil als das eine Gestaltsmittel jeweils eine Schulterfläche in Form eines nahezu gleichschenkligen Dreiecks bilden.

Bei im großen Ganzen rechteckförmiger Behälterform liegt vorzugsweise die Breite (Q) einer jeweiligen Behälterwandseite im Verhältnis (irsv) zu der Breite (B) einer angrenzenden Behälterwandseite, in Draufsicht auf eine seiner Stirnseiten gesehen, im Bereich von 0,7 bis 1,2, wobei der Bereich von 0,8 bis 1,1 besonders bevorzugt ist.

Die erfindungsgemäße Anordnung ist so getroffen, dass, ausgehend von seinen beiden Stirnseiten und der jeweils zuordenbaren Behälterwandseite, die Schulterfläche als weiteres Gestaltsmittel in Form eines Wanddreiecks in Richtung der vorspringenden, den Konuswinkel (ifa) begrenzenden Wandteile schräg abfällt.

Bei aus steifem Polypropylen-Material geformten Behältern beträgt die durchschnittliche Stärke der Behälterwand vorzugsweise 0,3 mm bis 0,5 mm.

Vorteilhafterweise kann auf der einen Behälterboden bildenden Stirnseite, die der Stirnseite mit dem Kopfteil abgewandt gegenüberliegt, eine Aufhängelasche angeordnet sein. Bei umlegbar angeformter Aufhängelasche kann am Behälterboden eine Vertiefung ausgebildet sein, in der die umgelegte Aufhängelasche derart aufnehmbar ist, dass eine ebene Standfläche am Behälterboden verbleibt.

Gemäß dem Patentanspruch 11 ist Gegenstand der Erfindung auch ein Verfahren zum Herstellen eines Behälters nach einem der Ansprüche 1 bis 10.

Nachstehend ist die Erfindung anhand der beigefügten Zeichnung im Einzelnen erläutert.

Es zeigen:
- Fig. 1: eine um den Faktor 1,3 vergrößert gezeichnete Seitenansicht eines Ausführungsbeispiels des erfindungsgemäßen Behälters, ausgelegt für ca. 100 ml Füllmenge;
- Fig. 2 und 3: eine Vorderansicht bzw. kopfseitige Stirnansicht des Behälters von Fig. 1;
- Fig. 4: eine perspektivische Schrägansicht des Ausführungsbeispiels des Behälters;
- Fig. 5: einen stark vereinfacht gezeichneten Längsschnitt einer zur Erzeugung eines erfindungsgemäßen Behälters dienenden Blasform, die ein Vorkollabieren des Behälters ermöglicht; und
- Fig. 6 und 7: der Fig. 5 entsprechende Darstellungen, in denen Arbeitsschritte bei Vorkollabieren bzw. Versiegeln des befüllten Behälters dargestellt sind.

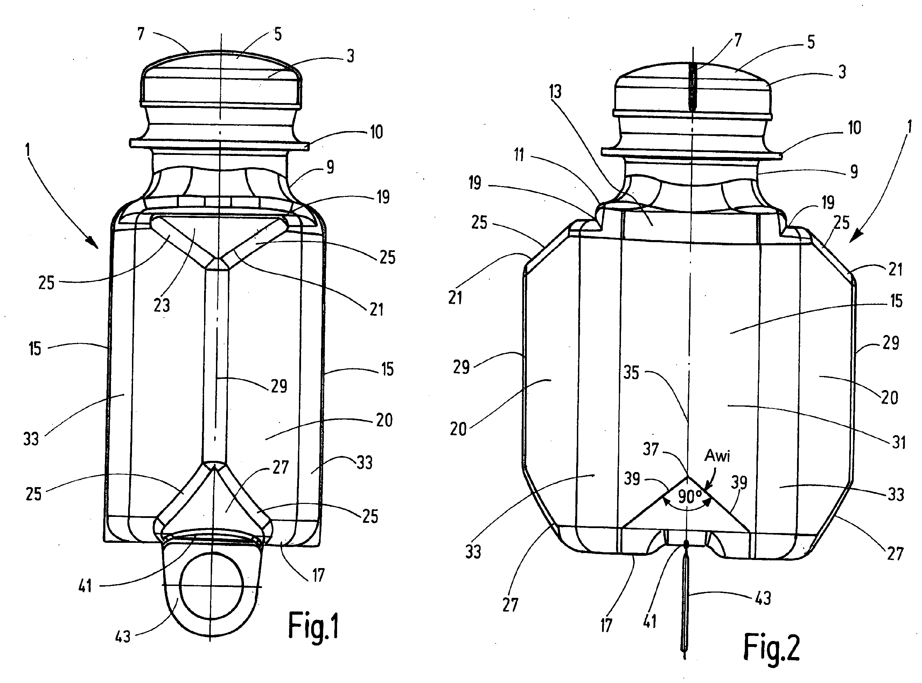

Die Fig. 1 bis 4 zeigen ein Ausführungsbeispiel eines fertiggestellten erfindungsgemäßen Behälters, der als Ganzes mit 1 bezeichnet und für eine Füllmenge von ca. 100 ml ausgelegt ist. Dabei ist der Behälter 1 in diesen Figuren gegenüber seiner natürlichen Größe ca. um den Faktor 1,3 vergrößert dargestellt. Der Behälter 1 ist aus Polypropylen mit einer durchschnittlichen Wandstärke von 0,4 mm nach dem BFS-Verfahren geformt, befüllt und versiegelt, wobei am Kopfteil 3 als oberer Abschluss eine Membran 5 gebildet ist. Diese dient bei der Anwendung als mittels einer Kanüle, Injektionsnadel oder einem Infusionsgerät durchstechbarer Bereich. Dabei wirkt die sich über die Membran 5 erstreckende Formtrennlinie 7, die bei dem Vorgang des Entformens des im BFS-Verfahren hergestellten Behälters 1 aus der Blasform gebildet wird, als Verstärkung der Membran 5 gegen ein Einstülpen beim Durchstechen.

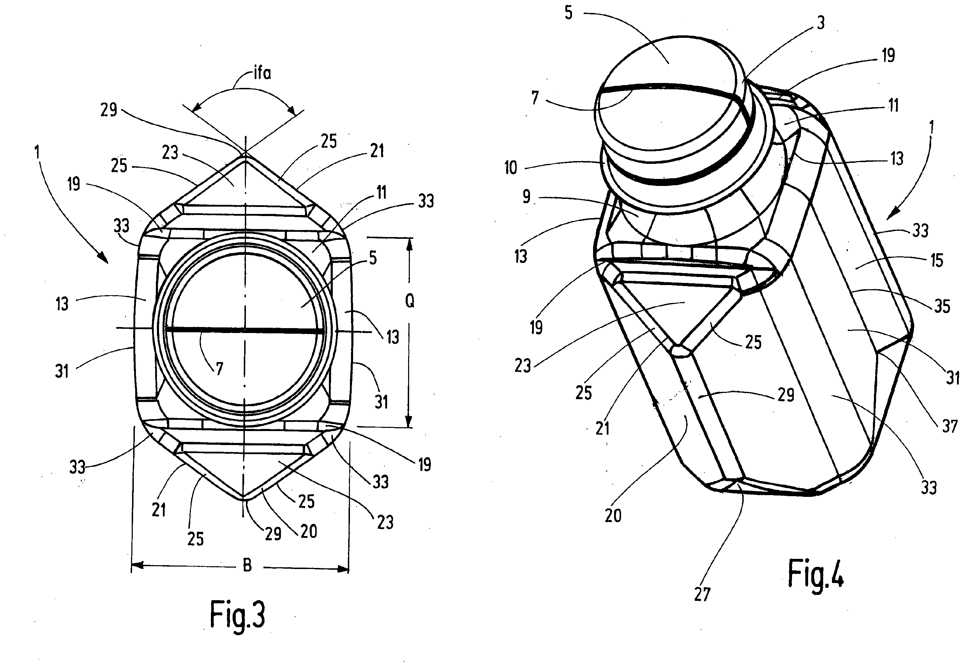

Über einen radial vorstehenden flachen Kragen 10 und einen Hals 9 geht das runde Kopfteil 3 in eine die obere Stirnseite des Behälters 1 bildende Schulter 11 über, die im Umriss rechteckförmig ist. An die zwei einander gegenüberliegenden Seitenränder 13 der Seiten des rechteckförmigen Umrisses der Schulter 11 schließen sich jeweils eine Behälter-Hauptwand 15 an, die zum Boden 17 verlaufen. An den beiden anderen Seitenrändern der Schulter 11 ist jeweils eine vertiefte, optionale Schulterkerbe 19 ausgebildet, an die sich Seitenschultern 21 anschließen, die zusammen mit weiteren Wandteilen Behälterwandseiten 20 bilden, die aus der rechteckförmigen Grundform vorspringen. Diese Seitenschultern 21 weisen, angrenzend an die zugehörige optionale Schulterkerbe 19, eine Seitenschulterfläche 23 mit etwa dreieckförmigem Umriss auf, die außenseitig von Schulterfalten 25 begrenzt sind. Diese Falten 25 schließen miteinander einen Konuswinkel ifa von 110° ein. Wie aus den Figuren und am deutlichsten aus Fig. 2 zu ersehen ist, sind die Ebenen der dreieckförmigen Seitenschulterflächen 23 von der optionalen Schulterkerbe 19 weg nach unten geneigt, wobei der Neigungswinkel etwa 45° beträgt. In entsprechender Weise wie die in Fig. 3 und 4 dem Betrachter zugekehrten Seitenschulterflächen 23, sind auch, von der bodenseitigen Behälterstirnseite ausgehend, untere, dreieckförmige Seitenschulterflächen 27 zwischen Schulterfalten 25 gebildet. Eine zwischen den Konusspitzen von oberer Seitenschulterfläche 23 und unterer Seitenschulterfläche 27 verlaufende Seitenfalte 29 bildet den Endrand der vorspringenden Behälterwandseite 20. Zwischen der jeweiligen vorspringenden Behälterwandseite 20 und den an deren Seiten jeweils angrenzenden weiteren Behälterwandseiten 31, die die Behälterhauptwände 15 bilden, befinden sich jeweils parallel zu den kürzeren Seitenfalten 29 verlaufende längere Seitenfalten 33.

In Fig. 3 sind die Abmessungen zweier gegenüberliegender Seiten der Rechteck-Grundform, genauer die Breite der Behälterwandseite 31, mit Q und die Abmessung der anderen Seiten der Rechteck-Grundform, also die Breite der vorspringenden Behälterwandseite 20, mit B bezeichnet. Bei der Erfindung liegt dieses innere Rechteckseitenverhältnis irsv = Q/B im Bereich von 0,7 bis 1,2, bevorzugt im Bereich von 0,8 bis 1,2. Bei dem in der Zeichnung dargestellten Ausführungsbeispiel beträgt der Wert von irsv etwa 1,1. Wie am deutlichsten aus Fig. 4 erkennbar ist, weisen die Behälterwandseiten 31, die die nicht vorspringenden Hauptwände 15 bilden, eine geringe Vertiefung auf, die, von den längeren Seitenfalten 33 ausgehend, zu einer Mittenlinie 35 abfällt, die sich entlang der Längsachse von dem jeweiligen oberen Seitenrand 13 zu einem Endpunkt 37 erstreckt, an dem sich die Mittenlinie 35 in Abschlusslinien 39 aufteilt, die miteinander einen Winkel Awi von 90° einschließen und bis zum Bodenteil 17 verlaufen. An diesem ist eine optionale Aufhängelasche 43 angeformt.

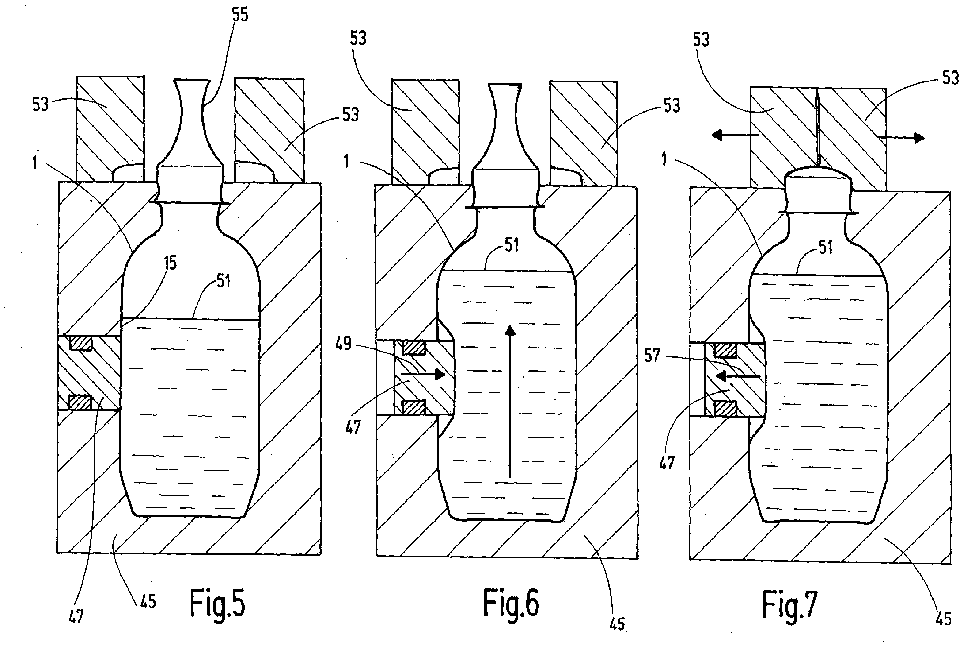

Die erfindungsgemäß vorgesehenen Gestaltsmittel, die das Kollabieren des Behälters 1 bei ohne Belüftung durchgeführten Infusionsvorgängen trotz eines steiferen Behälterwerkstoffes, wie Polypropylen, bewirken, eröffnen die Möglichkeit, die erfindungsgemäßen Behälter 1 mit einem sehr hohen Füllgrad zu versehen. Bei der Herstellung der Behälter 1 nach dem BFS-Verfahren kann erfindungsgemäß daher unterstützend auch so vorgegangen werden, dass nach dem Befüllen und vor dem Verschließen des Behälters 1 eine Vorkollabierung durchgeführt wird, die zu einer Erniedrigung des im Behälter 1 verbleibenden Luftvolumens führt. Die Fig. 5 bis 7 zeigen in Prinzipdarstellung die entsprechenden Verfahrensschritte während des Herstellverfahrens. Wie gezeigt, erfolgt das Vorkollabieren in der Weise, dass mindestens ein, vorzugsweise zwei in der Blasform 45 angeordnete, bewegliche Stempel 47, von denen in der vereinfachten Darstellung nur einer gezeigt ist, in die Form eingefahren werden und auf die auf mindestens einer der verformbaren Wände 15, 20, 31 und/oder die Seitenfalten 29 des Behälters 1 drücken. Bei dieser Bewegung, wie in Fig. 6 mit Pfeil 49 angedeutet, steigt der Füllpegel 51, während Luft bei den noch geöffneten Kopfbacken 53 über den verbliebenen, noch offenen Schlauchansatz 55 entweicht. Die Fig. 7 zeigt den Fertigzustand nach erfolgtem Schließen der Kopfbacken 53 und dadurch verschlossenem Behälter 1, der nach dem Zurückbewegen der Stempel 47 (s. Pfeil57) aus der Form 45 entformbar ist, wobei die vorher eingedrückte Behälterwand sich elastisch teilweise in ihren Ausgangszustand zurückstellt.

Wie bei Kunststoffbehältern aus dem Dokument DE 103 47 908 A1 an sich bekannt, kann der erfindungsgemäße Behälter auch aus mehreren Schichten unterschiedlicher Polymere bestehen. Auch kann anstelle des einzigen gezeigten Zugangs mit der Membran 5 am kreiszylindrischen Kopfteil 3 der Behälter auch mit mehreren Zugängen, vorzugsweise am Boden und am Kopfbereich, versehen sein. Weiterhin kann vordem Verschließen des Behälters 1 ein durchstechbares Elastomerelement eingelegt werden, das ein- oder mehrkomponentig sein kann. Des Weiteren kann das Kopfteil 3 mit einer aufgeschweißten Infusionskappe versehen sein, wie sie beispielsweise aus DE 10 2013 012 809 A1 an sich bekannt ist.

Für den Vergleich des Auslaufverhaltens der erfindungsgemäßen Behälter 1 mit dem Auslaufverhalten üblicher Referenzbehälter ohne die erfindungsgemäßen Gestaltsmittel wurden Auslaufversuche durchgeführt, wie nachstehend beschrieben:
Mit Hilfe einer Bottel-Pack-Anlage des Typs bp 364 von rommelag, Waiblingen, Deutschland, wurden mit Wasser befüllte und verschlossene, einstückige, erfindungsgemäße Infusions-Behälter sowie Referenzbehälter mit drei unterschiedlichen Nominal-Volumina (100 ml, 250 ml, 500 ml) aus unterschiedlichen Polypropylen-Materialien (LyondellBasell RP 270G; Borealis SB 815 MO, Flint Hills Rexene 23M2A) und mit einer durchschnittlichen Wandstärke von 0,35 - 0,52 mm nach dem Blasform-, Füll- und Siegelverfahren hergestellt. Ein Teil der Behälter wurde vor dem Verschließen wie vorab beschrieben durch einen Verfahrweg des Stempels (47) von 8 mm vorkollabiert und eine Infusionskappe gemäß ISO 15759 aufgeschweißt. Danach erfolgte eine Sterilisation durch Autoklavierung bei 121°C für 20 min und anschließend erfolgte die Messung des Auslaufverhaltens und die Bestimmung des maximalen Füllgrades.

Zur Messung des Auslaufverhaltens wurden die Behälter mit einem unbelüfteten Infusionsgerät gemäß DIN EN ISO 8536-4:2011-01 angestochen und die Masse der auslaufenden Flüssigkeit auf einer Analysenwaage über die Zeit verfolgt. Das Auslaufen erfolgte über eine Injektionskanüle 0,6 mm x 30 mm gemäß ISO 13097. Die Messungen fanden bei einer Raumtemperatur von 21°C statt. Die Höhe der Flüssigkeitssäule (Auslaufhöhe) betrug 775 mm.

Um Flaschen verschiedener Volumenklassen miteinander vergleichen zu können, wurde als Gütekriterium für die Bewertung der maximale Füllgrad des Behälters, das heißt das Verhältnis von experimentell bestimmtem Gesamtvolumen zu maximalem Füllvolumen, gewählt, bei dem der Behälter gerade noch leer läuft. Hierbei werden unvermeidlich im Behälter zurückbleibende Flüssigkeitsmengen, zum Beispiel die im Kopfraum unterhalb der Öffnung des Einstechdorns des Infusionsgerätes befindlichen Mengen, nicht berücksichtigt.

Eine Erhöhung des maximalen Füllgrades bedeutet, dass gegenüber den Referenzbehältern ein wesentlich geringeres Luftvolumen notwendig ist, was sich sehr vorteilhaft in verringerten Packmaßen, Verpackungs-, Transportkosten, Lager- und Entsorgungskosten etc. niederschlägt.

Die verwendeten drei Materialien, sowie deren Elastizitätsmoduln, Zugmodul bei 50 mm/min gemäß ISO 527 und ggf. Biegemodul bei 50 mm/min gemäß ISO 178, sowie deren Dichte gem. ISO 1183 bei 23°C sind in der nachfolgenden Tabelle zusammengestellt.

| Hersteller/Material | Zug-E-Modul MPa | Biege-E-Modul MPa | Dichte g/cm3 |
|---|---|---|---|
| Borealis SB815MO | 475 | 425 | 0,900 |
| LyondellBasell RP270G | 950 | 850 | 0,900 |
| Flint Hills Rexene 23M2A | 1100 | 1000 | 0,902 |

Die Ergebnisse für Referenzbehältnisse (Versuche 1 und 2) und für die erfindungsgemäßen Behälter (Versuche 3 bis 14) sind in der folgenden Tabelle zusammengefasst.

| Experiment Nr. | Flaschentyp | Material | Vor kollabierung | irsv | ifa winkel | Gesamt volumen | max. Füllvolumen | min. Luftvolumen | max Füllgrad |
|---|---|---|---|---|---|---|---|---|---|
| | | | | | Grad | in ml | in ml | in ml | % |
| 1 | Referenz | RP270G | nein | | | 205 | 139 | 66 | 68% |
| 2 | Referenz | SB815MO | nein | | | 220 | 161 | 69 | 73% |
| 3 | EE-200-sb | SB815MO | nein | 1 | 110 | 220 | 180 | 40 | 82% |
| 4 | EE-200-sb | SB815MO | ja | 1 | 110 | 216 | 181 | 34 | 84% |
| 6 | EE-201-sb | SB816MO | nein | 0,8 | 120 | 226 | 176 | 50 | 78% |
| 6 | EE-201-sb | SB816MO | ja | 0,8 | 120 | 216 | 176 | 39 | 82% |
| 7 | EE-201-rex | Rexene 23M2A | nein | 0,8 | 120 | 211 | 168 | 63 | 76% |
| 8 | EE-201-rex | Rexene 23M2A | ja | 0,8 | 120 | 200 | 156 | 44 | 78% |
| 9 | EE-500-sb | SB816MO | nein | 1,1 | 116 | 640 | 663 | 77 | 88% |
| 10 | EE-600-rex | Rexene 23M2A | nein | 1,1 | 116 | 690 | 478 | 112 | 81% |
| 11 | EE-600-sb | SB816MO | ja | 1,1 | 115 | 630 | 673 | 57 | 91% |
| 12 | EE-601-rp | RP270G | nein | 0,9 | 106 | 686 | 474 | 111 | 81% |
| 13 | EE-100-sb | SB815MO | nein | 0,9 | 110 | 135 | 101 | 34 | 75% |
| 14 | EE-101-rp | RP270G | nein | 0,9 | 106 | 125 | 86 | 39 | 69% |

Wie aus der Tabelle der Versuchsergebnisse ersichtlich ist, ermöglicht die Erfindung im Vergleich zu den Referenzbehältern einen wesentlich höheren maximalen Füllgrad, wobei, wie ersichtlich, bei durchgeführter Vorkollabierung besonders hohe, bis zu 91 % reichende Füllgrade (siehe Versuch Nr. 11) erreichbar sind.

## Patentansprüche

1. Behälter aus Kunststoffmaterial, der nach dem Blasform-, Füll- und Siegelverfahren hergestellt und dessen von einer Behälterwand (15, 20) eingeschlossene Befüllung autoklavierbar ist, wobei mindestens ein Gestaltsmittel (19, 21, 23, 25, 29, 33) in der Behälterwand (15, 20) vorgesehen ist, das trotz eines hohen Befüllungsgrades sicherstellt, dass bei einer Infusionsabgabe des Füllguts ohne Behälterbelüftung der Behälter (1) volumenreduzierend kollabiert, wobei er von seiner Grundausgestaltung her rechteckförmig ausgebildet ist und an zwei einander gegenüberliegenden Behälterwandseiten (20) als ein Gestaltsmittel vorspringende Wandteile (21, 23) aufweist, die paarweise konisch aufeinander zugeneigt einen Konuswinkel (ifa) von weniger als 120° miteinander einschließen, und wobei ausgehend von seinen beiden Stirnseiten (11) und der jeweils zuordenbaren Behälterwandseite (20), die seitliche Schulterfläche (23) als weiteres Gestaltsmittel in Form eines Wanddreiecks in Richtung der vorspringenden, den Konuswinkel (ifa) begrenzenden Wandteile (26) schräg abfällt, **dadurch gekennzeichnet, dass** auf seinen gegenüberliegenden Behälterwandseiten (31) als weiteres Gestaltsmittel eine flach abfallende Vertiefung eingeformt ist, die in einer Mittenlinie (35) entlang der Längsachse verläuft, im Abstand vom Boden (17) endet und sich dort in Richtung auf die benachbarten Stirnseiten (11) hin in zwei Abschlusslinien (39) aufteilt, die an der Stelle des Übergangs (37) zu der Mittenlinie (35) einen Anstellwinkel (Awi) von 60°-130° miteinander einschließen.

2. Behälter nach Anspruch 1, **dadurch gekennzeichnet, dass** er aus Kunststoffmaterialien mit einer hohen Wärmeformbeständigkeit, wie Polypropylen, besteht, die gegen das Autoklavieren wärmeresistent sind.

3. Behälter nach Anspruch 1 oder 2, **dadurch gekennzeichnet, dass** die Behälterwand (15, 20) mit einem hermetisch verschlossenen Kopfteil (3), das auf einer seiner Stirnseiten (11) angeordnet als Entnahmeöffnung für das Behälter-Füllgut dient, einstückig ausgebildet ist.

4. Behälter nach einem der vorstehenden Ansprüche, **dadurch gekennzeichnet, dass** die als Gestaltsmittel vorspringenden Wandteile (21, 23) paarweise konisch aufeinander zugeneigt einen Konuswinkel (ifa) von 110° oder weniger miteinander einschließen.

5. Behälter nach einem der vorstehenden Ansprüche, **dadurch gekennzeichnet, dass** das jeweils vorspringende Wandteil (20) als das eine Gestaltsmittel jeweils eine seitliche Schulterfläche (23) in Form eines nahezu gleichschenkligen Dreiecks bildet.

6. Behälter nach einem der vorstehenden Ansprüche, **dadurch gekennzeichnet, dass** die Breite (Q) einer Behälterwandseite (15, 31) im Verhältnis (irsv) zu der Breite (B) der jeweils angrenzenden Behälterwandseite, in Draufsicht auf eine seiner Stirnseiten (11) gesehen, im Bereich von 0,7 bis 1,2, besonders bevorzugt im Bereich von 0,8 bis 1,2 liegt.

7. Behälter nach einem der vorstehenden Ansprüche, **dadurch gekennzeichnet, dass** die seitliche Schulterfläche (23) als weiteres Gestaltsmittel in Form des Wanddreiecks in Richtung der vorspringenden, den Konuswinkel (ifa) begrenzenden Wandteile (26) schräg um einen Winkel von 30° bis 60°, besonders bevorzugt von 45°, abfällt.

8. Behälter nach einem der vorstehenden Ansprüche, **dadurch gekennzeichnet, dass** an der Stelle des Übergangs (37) zu der Mittenlinie (35) der Anstellwinkel (Awi), besonders bevorzugt, 90° beträgt.

9. Behälter nach einem der vorstehenden Ansprüche, **dadurch gekennzeichnet, dass** die mittlere Stärke der Behälterwand aus steifem Polypropylen-Material 0,3 mm bis 0,7 mm, bevorzugt 0,4mm bis 0,5 mm beträgt.

10. Behälter nach einem der vorstehenden Ansprüche, **dadurch gekennzeichnet, dass** auf der einen Behälterboden (17) bildenden Seite, die der Stirnseite (11) mit dem Kopfteil (3) abgewandt gegenüberliegt, eine Aufhängelasche (43) angeordnet ist.

11. Verfahren zum Herstellen eines Behälters (1) nach einem der vorstehenden Ansprüche, **dadurch gekennzeichnet, dass** er im Blasformverfahren mit dem jeweiligen Gestaltsmittel (19, 21, 23, 25, 29, 33) für eine bessere Kollabierbarkeit der Behälterwand (15, 20, 31) in einem Formwerkzeug (45, 53) geformt wird, im Formwerkzeug (45, 53) mittels eines Füllvorgangs befüllt und zur Erniedrigung des Luftvolumens vor Verschließen vorkollabiert wird, mittels eines Siegelverfahrens innerhalb des Formwerkzeugs (45, 53) verschlossen und außerhalb des Formwerkzeugs (45, 53) autoklaviert wird.

12. Verfahren nach Anspruch 11, **dadurch gekennzeichnet, dass** das Autoklavieren bei mindestens 121°C über einen Zeitraum von mindestens 20 Minuten stattfindet.

## Claims

1. Container made from plastics material, which is manufactured using the blow moulding, filling and sealing (Blow-Fill-Seal) method and where the filling of said container, which is enclosed by a container wall (15, 20), is autoclavable, at least one shaping means (19, 21, 23, 25, 29, 33) being provided in the container wall (15, 20), said shaping means ensuring, despite a high filling level, that the container (1) collapses so as to reduce its volume when the filling material is delivered by infusion without container ventilation, said container being rectangular in terms of its basic design and comprising wall parts (21, 23) protruding as shaping means on two opposite container wall sides (20), said wall parts being inclined conically towards one another in pairs to enclose a cone angle (ifa) of less than 120°, the side shoulder face (23) sloping obliquely downwards as a further shaping means in the form of a wall triangle in the direction of the protruding wall parts (26) defining the cone angle (ifa) from both end faces (11) of said container and each container wall side (20) to which it can be assigned, **characterised in that** a gently sloping depression is formed on its opposite container wall sides (31) as a further shaping means, said depression running in a centre line (35) along the longitudinal axis, ending at a distance from the base (17) and dividing into two end lines (39) at this point in the direction of the adjacent end faces (11), said end lines together enclosing an angle of attack (Awi) of 60°-130° at the point of transition (37) to the centre line (35)

2. Container according to claim 1, **characterised in that** it consists of plastics materials with high heat resistance such as polypropylene, which are heat resistant to autoclaving.

3. Container according to either claim 1 or claim 2, **characterised in that** the container wall (15, 20) is designed in one piece with a hermetically sealed top part (3), which, arranged on one of the end faces (11) of said container, serves as an extraction opening for the container filling material.

4. Container according to any one of the preceding claims, **characterised in that** the wall parts (21, 23) protruding as shaping means and inclined towards one another conically in pairs together enclose a cone angle (ifa) of 110° or less.

5. Container according to any one of the preceding claims, **characterised in that** each respective protruding wall part (20) as one shaping means forms a side shoulder surface (23) in the form of an almost equilateral triangle.

6. Container according to any one of the preceding claims, **characterised in that** the width (Q) of a container wall side (15, 31) in relation (irsv) to the width (B) of the respective adjacent container wall side, when viewed from above on one of its end faces (11), is in the region of 0.7 to 1.2, or more preferably in the region of 0.8 to 1.2.

7. Container according to any one of the preceding claims, **characterised in that** the side shoulder surface (23) slopes obliquely downwards at an angle of 30° to 60°, or more preferably 45°, as a further shaping means in the form of a wall triangle in the direction of the protruding wall parts (26) defining the cone angle (ifa).

8. Container according to any one of the preceding claims, **characterised in that** the angle of attack (Awi) at the point of transition (37) to the centre line (35) is most preferably 90°.

9. Container according to any one of the preceding claims, **characterised in that** the average thickness of the container wall made from rigid polypropylene material is 0.3 mm to 0.7 mm, more preferably 0.4 mm to 0.5 mm.

10. Container according to any one of the preceding claims, **characterised in that** a hanging tab (43) is arranged on the side forming the container base (17), said side being at the opposite end facing the other way to the end face (11) with the top part (3).

11. Method for manufacturing a container (1) according to any one of the preceding claims, **characterised in that** said container is moulded in a moulding tool (45, 53) using the blow moulding procedure with the respective shaping means (19, 21, 23, 25, 29, 33) to ensure improved collapsibility of the container wall (15, 20, 31), filled in the moulding tool (45, 53) by means of a filling process and pre-collapsed to reduce the air volume before sealing, sealed inside the moulding tool (45, 53) by means of a sealing method and autoclaved outside the moulding tool (45, 53).

12. Method according to claim 11, **characterised in that** autoclaving takes place at a minimum of 121 °C for a period of at least 20 minutes.

## Revendications

1. Récipient en matière plastique, qui est fabriqué par le procédé de moulage par soufflage, remplissage et scellement et dont le contenu, enfermé par une paroi (15, 20) du récipient, peut être autoclavé, dans lequel il est prévu, dans la paroi (15, 20) du récipient, au moins un moyen (19, 21, 23, 25, 29, 33) de conformation, qui, en dépit d'un grand degré de remplissage, assure, lors d'une distribution du produit de remplissage par infusion sans alimentation en air du récipient, que le récipient (1) s'affaisse avec réduction de volume, dans lequel il est, par sa conformation de base, de forme rectangulaire et a, sur deux côtés (20) de paroi opposés l'un à l'autre, des parties (21, 23) de paroi en saillie en tant que moyen de conformation, qui, en étant inclinées l'une vers l'autre coniquement par paire, font entre elles un angle (ifa) de cône de moins de 120°, et dans lequel, à partir de ses deux côtés (11) frontaux et du côté (20) de paroi du récipient pouvant être associé respectivement, la surface (23) latérale d'épaulement, en tant qu'autre moyen de conformation sous la forme d'un triangle de paroi, descend en pente inclinée en direction des parties (26) de paroi en saillie délimitant l'angle (ifa) de cône, **caractérisé en ce qu'**il est formé, sur ses côtés (31) de paroi de récipient opposés, comme autre moyen de conformation, une cavité descendante à plat, qui s'étend en une ligne (35) médiane suivant l'axe longitudinal, se termine à distance du fond (17) et s'y subdivise dans la direction des côtés (11) frontaux voisins, en deux lignes (39) de terminaison, qui, au point de la transition (37) à la ligne (35) médiane, font un angle (Awi) d'incidence de 60° à 130° entre elles.

2. Récipient suivant la revendication 1, **caractérisé en ce qu'**il est constitué de matière plastique ayant une grande résistance à la déformation à la chaleur, comme en polypropylène, qui résiste à la chaleur de l'autoclavage.

3. Récipient suivant la revendication 1 ou 2, **caractérisé en ce que** la paroi (15, 20) du récipient est constituée d'une seule pièce avec une partie (3) de tête fermée hermétiquement, qui est disposée sur l'un de ses côtés (11) frontaux et qui sert d'ouverture de prélèvement pour le produit de remplissage du récipient.

4. Récipient suivant l'une des revendications précédentes, **caractérisé en ce que** les parties (21, 23) de paroi en saillie, sous la forme de moyen de conformation, font, en étant inclinées l'une vers l'autre coniquement par paire, un angle (ifa) de cône inférieur ou égal à 110°.

5. Récipient suivant l'une des revendications précédentes, **caractérisé en ce que** la partie (20) de paroi en saillie, respectivement, forme une surface (23) d'épaulement latérale, en tant qu'un moyen de conformation, sous la forme d'un triangle à peu près isocèle.

6. Récipient suivant l'une des revendications précédentes, **caractérisé en ce que** le rapport (irsv) de la largeur (Q) d'un côté (15, 31) de paroi du récipient à la largeur (B) du côté de paroi du récipient voisin, considéré en vue en plan sur l'un de ses côtés (11) frontaux, est dans la plage de 0,7 à 1,2, d'une manière particulière préférée dans la plage de 0,8 à 1,2.

7. Récipient suivant l'une des revendications précédentes, **caractérisé en ce que** la surface (23) d'épaulement latérale, comme autre moyen de conformation sous la forme d'un triangle de paroi, descend d'une manière inclinée d'un angle de 30° à 60°, d'une manière particulièrement préférée de 45°, dans la direction des parties (26) de paroi en saillie délimitant l'angle (ifa) de cône.

8. Récipient suivant l'une des revendications précédentes, **caractérisé en ce qu'**au point de la transition (37) à la ligne (35) médiane, l'angle (Awi) d'incidence est, d'une manière particulièrement préférée, de 90°.

9. Récipient suivant l'une des revendications précédentes, **caractérisé en ce que** l'épaisseur moyenne de la paroi du récipient, en un matériau de polypropylène rigide, va de 0,3 mm à 0,7 mm, d'une manière préférée de 0,4 mm à 0,5 mm.

10. Récipient suivant l'une des revendications précédentes, **caractérisé en ce que**, du côté formant un fond (17) du récipient, qui est opposé en en étant loin au côté (11) frontal ayant la partie (3) de tête, est prévue une languette (43) de suspension.

11. Procédé de production d'un récipient (1) suivant l'une des revendications précédentes, **caractérisé en ce qu'**il est moulé, dans un outil (45, 53) de moulage, dans le procédé de moulage par soufflage, avec le moyen (19, 21, 23, 25, 29, 33) respectif de conformation pour une meilleure aptitude à s'affaisser de la paroi (15, 20, 31) du récipient, il est rempli dans l'outil (45, 53) de moulage au moyen d'une opération de remplissage et il est pré-affaissé pour diminuer le volume d'air avant la fermeture, il est fermé au moyen d'un procédé de scellement dans l'outil (45, 53) de moulage et il est autoclavé à l'extérieur de l'outil (45, 53) de moulage.

12. Procédé suivant la revendication 11, **caractérisé en ce que** l'autoclavage a lieu à au moins 121°C pendant une durée d'au moins 20 minutes.
